# EUROPEAN PATENT SPECIFICATION

(11) **EP 4 302 614 B1**
(45) Date of publication and mention of the grant of the patent: **02.09.2026**
(21) Application number: 22763184.3
(22) Date of filing: 28.02.2022
(51) Int. Cl.: A23L 27/00, A23L 27/20, A23L 2/68, A23L 2/52, A23L 29/00, A23L 2/56, C12J 1/08, A23L 33/10

(54) **ACID IRRITATION-REDUCING AGENT**
MITTEL ZUR VERMINDERUNG VON SÄUREREIZUNGEN
AGENT RÉDUISANT L'IRRITATION ACIDE

(30) Priority: 02.03.2021 JP 2021032904
(43) Date of publication of application: 10.01.2024
(73) Proprietor: Mizkan Holdings Co., Ltd., Handa-shi, Aichi 475-8585 (JP)
(72) Inventor: MIYAMOTO Kanako, Handa-shi, Aichi 475-8585 (JP)
(74) Representative: Hasegawa, Kan
(86) International application number: PCT/JP2022/008262
(87) International publication number: WO 2022/186128

(56) References cited:
- CN-A- 101 654 649
- CN-A- 105 018 324
- JP-A- 2004 089 119
- JP-A- 2008 073 007
- JP-A- 2009 051 751
- JP-A- 2014 096 990
- JP-A- H06 279 270
- JP-B1- 6 792 251
- US-A1- 2011 236 560
- DATABASE GNPD [online] MINTEL; 3 June 2020 (2020-06-03), ANONYMOUS: "Raspberry & Cardamom Apple Cider Vinegar", XP093181499, retrieved from https://www.gnpd.com/sinatra/recordpage/7667253/ Database accession no. 7667253
- ANONYMOUS: "Recipe for cardamom-flavoured pickles", RAKUTEN, 28 May 2017 (2017-05-28), XP055962735, Retrieved from the Internet <URL:https://recipe.rakuten.co.jp/recipe/1000010521/> [retrieved on 20220920]
- ANONYMOUS: "Launch of drinkable vinegar!", SHINQS, 9 August 2019 (2019-08-09), XP055962729, Retrieved from the Internet <URL:https://blog.shinqs.jp/shop/osuya/detail/17579/>
- ANONYMOUS: "Recipe for cardamom-flavoured pickles", RAKUTEN, 28 May 2017 (2017-05-28), XP055962735, Retrieved from the Internet <URL:https://recipe.rakuten.co.jp/recipe/1000010521/>

## Description

### Technical Field

The present invention relates to the use of an agent for reducing acid irritation which alleviates throat irritation due to acetic acid.

### Background Art

Acetic acid is used in a food or beverage product as a flavoring ingredient and for its bacteriostatic and other effects. Furthermore, in recent years, along with the increase in health consciousness, there has been a growing awareness of actively consuming various food or beverage products and supplements made from vinegar in anticipation of beneficial effects of acetic acid on health, such as visceral fat reduction, blood pressure reduction, suppression of postprandial blood sugar elevation, and recovery from fatigue.

However, because a food or beverage product containing acetic acid have a sharp acid taste and pungent odor (acetic acid smell) characteristic of acetic acid, its intake is sometimes avoided, even though acetic acid is a useful ingredient with health benefits and bacteriostatic effects.

Therefore, methods for reducing sharp acid taste and pungent odor characteristic of acetic acid in a food or beverage product containing acetic acid have been proposed. For example, JP 2011-217655 A discloses that a food or beverage product which has an excellent flavor with reduced acetic acid smell can be produced by including camphor and/or eugenol in the food or beverage product containing acetic acid at a specific ratio to acetic acid. JP 2008-245539 A has reported that a vinegar drink with reduced acid taste and irritating odor of acetic acid by including β-glucan at a specific ratio based on acetic acid. JP 2001-69940 A has reported an acid-containing seasoning having sharp acid taste suppressed and having mild acid taste can be obtained by including edible organic acid and 3-hydroxy 4,5-dimethyl-2(5H)-furanone in combination. JP 2019-129806 A proposes an acetic acid-containing food or beverage product having acid taste and acid smell both suppressed by including at least one aromatic component selected from the group consisting of (A) an unsaturated alcohol having 8 carbon atoms and (B) a monoterpene or a sesquiterpene. However, conventional methods have problems of unsatisfactory reduction of acid taste or irritating odor, and transfer of the aroma of additives themselves to food or beverage product, which breaks the original balance of taste and flavor of the food or beverage product, reducing its palatability.

CN 101654649 discloses a formula of spiced vinegar. The formula comprises 27 raw materials such as vinegar, nutmeg and alpinia katsumadai.

"Raspberry & Cardamom Apple Cider Vinegar" (DATABASE GNPD MINTEL, Database accession no. 7667253) refers to a raspberry & cardamom apple cider vinegar.

CN 105018324 A refers to stomach-nourishing pumpkin vinegar. Said vinegar comprises alpinia katsumadai hayata in order to enhance the stomach nourishing effect.

"Recipe for cardamom-flavoured pickles" (Rakuten, 28 May 2017, Retrieved from the Internet: URL:https://recipe.rakuten.co.jp/recipe/1000010521/) refers to a cardamom pickles recipe.

JP 2014-096990 A discloses the use of an agent for reducing acid irritation (acid taste reducing substance), derived from coffee beans. JP 6 792251 B1 discloses an acetic acid-containing food or drink, in which an acetic acid odour and / or a pungent odour (preferably both) is to be suppressed. It does not suggest that cardamomin can be used as active agent for reducing acid irritation of vinegar. US 2011/236560 A1 eaches that the astringency of a phenolic antioxidant supplemented composition can be reduced by adding an acetic acid solution. It does not suggest that cardamonin, which is a phenolic compound, could benefit from such combination.

### Summary of Invention

### Technical Problem

An object of the present invention is to provide an agent for reducing acid irritation capable of reducing throat irritation when an acetic acid-containing food or beverage product is taken.

### Solution to Problem

The present inventors have conducted intensive studies to solve the above problem, and have found that cardamonin has the effect of reducing throat irritation when an acetic acid-containing food or beverage product is taken, and also has the effect of reducing acid taste, stuffy smell and acid smell, and the present invention according to claim 1 or claim 4 has been completed.

### Advantageous Effect of Invention

The present invention provides the use of an agent for reducing acid irritation capable of reducing throat irritation, acid taste and stuffy smell when an acetic acid-containing food or beverage product is taken. Thus, an acetic acid-containing food or beverage product such as a vinegar drink to which the agent for reducing acid irritation of the present invention is mixed has reduced acid taste, stuffy smell and acid smell characteristic of acetic acid, which are often avoided, and thus people can take acetic acid that is useful for health.

### Description of Embodiments

In the present description, when there are a plurality of upper limits and/or a plurality of lower limits for a specified numerical range, it is understood that a numerical range defined by the maximum of the upper limit and the minimum of the lower limit is at least directly described even if it is not clearly stated. All numerical ranges combining any of those upper limits and any of those lower limits are included in an embodiment of the present invention. Furthermore, in the present description, the numerical ranges connected by "to" means that the numerical ranges include the values before and after "to" as the lower limit and the upper limit. When a plurality of lower limits and a plurality of upper limits are described separately, any of the lower limits and the upper limits may be selected and connected by "to."

### 1. Agent for reducing acid irritation

The agent for reducing acid irritation comprises cardamonin as an active ingredient.

Cardamonin (name: (E)-2',4'-dihydroxy-6'-methoxychalcone, (2E)-1-(2,4-dihydroxy-6-methoxyphenyl)-3-phenylprop-2-en-1-one) used in the agent for reducing acid irritation of the present invention is one of chalconoids with formula C₁₆H₁₄O₄ (molecular weight: 270.284) and CAS registry number of 19309-14-9.

Cardamonin described above is not limited as long as it allows oral intake. A synthetic product, a plant ingredient including cardamonin or an extract thereof may be used. Examples of plant ingredients containing cardamonin include cardamon, turmeric, shell ginger tea and *Alpinia hainanensis.* One of them may be used alone or two or more of them may be used in combination. The extract of cardamonin may be prepared by adding the above plant ingredient containing cardamonin to a solvent, allowing the mixture to stand and then filtrating the same. Alternatively, the extract may be prepared by heating the solvent to which the above plant ingredient containing cardamonin have been added to a specific temperature and then allowing it to stand, or by keeping it at a constant temperature while stirring. Examples of solvents used for extraction include water, ethanol and a water-ethanol mixed solvent, and water is preferred. The amount of the solvent used is not particularly limited, and may be 10 times or more, and is preferably 20 times or more the amount of the above plant ingredient containing cardamonin (dry weight). It is preferable that the amount is 100 times or less for convenient operation of concentration and isolation after extraction. The extract of cardamonin may be directly used as the agent for reducing acid irritation of the present invention, and where necessary, a concentrate or a dried product thereof prepared by concentration, drying such as hot air drying, steam drying, lyophilization and spray drying, separation and purification, or bleaching may also be used as the agent for reducing acid irritation of the present invention.

The agent for reducing acid irritation of present invention is suitably used for reducing throat irritation, acid taste and stuffy smell when an acetic acid-containing food or beverage product is taken. The "throat irritation" in the present invention refers to a sore or uncomfortable feeling in the throat caused by acetic acid when or after swallowing an acetic acid-containing food or beverage product, which is specifically a scratchy or tingling feeling. Furthermore, reduction of throat irritation means complete or partial elimination of throat irritation. The "acid taste" in the present invention is one of the five basic tastes (acid taste, sweet taste, salty taste, bitter taste and *umami* taste). It is a peculiar sour taste felt when an acidic substance included in food or beverage such as acetic acid, citric acid, malic acid, lactic acid and tartaric acid stimulates the acid taste receptor in taste cells in the tongue. In the present invention the "stuffy smell" refers to a smell like cheese or sweaty socks, which is derived from acetoin produced in the acetic acid fermentation process and diacetyl produced by the autooxidation of acetoin. This is also called "stuffy odor."

The content of cardamonin in the agent for reducing acid irritation of the present invention is in the range of 0.00001 to 99.9% by weight. The content may be changed depending on the formulation.

The agent for reducing acid irritation of the present invention may be in the form of liquid or solid. Examples of solid forms include powder, granules, blocks and capsules. When the agent for reducing acid irritation of the present invention is in the form of liquid, examples of bases include water, alcohol (e.g., ethanol), liquid sugar, oil and fat, glycerol and propylene glycol. When the agent for reducing acid irritation of the present invention is in the form of solid, examples of bases include sugars such as starch, dextrin, cyclodextrin, sucrose and glucose, protein, peptide, salt, oil and fat, silicon dioxide, a mixture thereof, yeast and various extract powders.

An additive acceptable for food hygiene may be used in the agent for reducing acid irritation of the present invention in addition to cardamonin as long as the additive does not disturb the effect of reducing throat irritation, acid taste and stuffy smell. Examples of additives include proteins, peptides, amino acids, vitamins, minerals (e.g., calcium, potassium, sodium), lipids (e.g., plant oil, fish oil, animal oil), sweeteners (e.g., glucose, sucrose, fructose, high fructose corn syrup, aspartame, stevia), acidulants (e.g., citric acid, malic acid, tartaric acid), excipients (e.g., dextrin, starch), flavors (e.g., ester, alcohol, aldehyde, ketone, acetal, phenol, ether, lactone, furan, hydrocarbon, a nitrogen-containing compound, a sulfur-containing compound), a binder, a diluent, a colorant, a buffer, a thickener, a gelling agent, a stabilizer, a preservative, an emulsifier, a dispersant, a suspending agent and a preservative.

### 2. Acetic acid-containing food or beverage product

When added to an acetic acid-containing food or beverage product, the agent for reducing acid irritation of the present invention can alleviate throat irritation when the acetic acid-containing food or beverage product is taken and can reduce acid taste, stuffy smell and acid smell. Thus, the agent for reducing acid irritation is expected to be effective for changing, modifying or improving the original taste and flavor of the food or beverage product to a desired one, and enhancing the original taste and flavor to the desired level. The agent for reducing acid irritation of the present invention may be added to an acetic acid-containing food or beverage product as part of the raw materials when producing the food or beverage product, or may be added when eating and drinking the food or beverage product.

In the present invention, acetic acid refers to acetic acid molecules (CH₃COOH) and acetic acid ions (CH₃COO-). The content of acetic acid means the total concentration of the two. The lower limit of the content of acetic acid in the acetic acid-containing food or beverage product of the present invention is preferably 0.1 w/v%, more preferably 0.2 w/v% and further preferably 0.5 w/v% because the need for the agent for reducing acid irritation of the present invention is increased. The upper limit of the content is preferably 15 w/v%, more preferably 10 w/v%, further preferably 7 w/v%, and still more preferably 5 w/v% depending on the type of the acetic acid-containing food or beverage product. The origin of acetic acid in the acetic acid-containing food or beverage product of the present invention is not particularly limited as long as it is derived from a substance suitable for the acetic acid-containing food or beverage product. For example, acetic acid may be derived from a food additive (acetic acid in the acetic acid-containing food or beverage product of the present invention is included in a food additive) or may be derived from a seasoning or a food material added to food or beverage (acetic acid in the acetic acid-containing food or beverage product of the present invention is included in a seasoning or a food material).

The acetic acid-containing food or beverage product to which the agent for reducing acid irritation of the present invention is added is not particularly limited as long as it is vinegar and a food or beverage product produced by using vinegar as a raw material.

Examples of vinegars described above include a brewed vinegar produced using a cereal such as rice and wheat or fruit juice as a main raw material, and a synthetic vinegar prepared by adding a seasoning such as sugar to a diluted solution of glacial acetic acid or acetic acid or by adding a brewed vinegar thereto. Both may be used in the present invention. Examples of brewed vinegars include grain vinegar (e.g., rice vinegar, brown rice vinegar, black vinegar, sake lees vinegar, malt vinegar, adlay vinegar, soybean vinegar); fruit vinegar (e.g., apple vinegar, grape vinegar, white grape vinegar, citrus (e.g., lemon, *yuzu, kabosu,* orange, mandarin orange, shikuwasa, grapefruit) vinegar, mango vinegar, strawberry vinegar, blueberry vinegar, pomegranate vinegar, peach vinegar, *ume* (Japanese apricot) vinegar, pineapple vinegar, cassis vinegar, raspberry vinegar, wine vinegar and balsamic vinegar), a sake lees vinegar produced by acetic acid fermentation using ethanol as a raw material, Chinese vinegar, and Sherry vinegar. Examples of synthetic vinegar include those prepared by diluting glacial acetic acid or acetic acid with water. These vinegars may be used alone or two or more of them may be used in combination.

Examples of the food or beverage product produced using vinegar as a raw material include vinegar drinks (e.g., grain vinegar drink, fruit vinegar drink, fruit juice-containing vinegar drink), seasoning vinegar (*ponzu, ponzu* soy sauce, sweet vinegar, seasoning vinegar for vinegared food, seasoning vinegar for *sushi* rice, seasoning liquid for pickled food (e.g., pickles)), mayonnaise, dressings (e.g., oil-free dressing, separate dressing, emulsified dressing), *tare* (Japanese dripping sauce; e.g., a sesame-containing seasoning such as sesame sauce and barbeque sauce), sauce (e.g., Worcestershire sauce, ketchup, oyster sauce), *tsuyu* (Japanese soup broth; e.g., *mentsuyu* (noodle soup base), *nabetsuyu* (hot pot soup)), seasoning for various dishes (seasoning for rice, seasoning for Chinese dishes, seasoning for stewed dishes and seasoning for fermented soy beans), fermented food or beverage (pickles, kimchi, yogurt, probiotic drinks, fermented milk drinks), vinegar-containing cooked food (e.g., *sushi,* vinegared food, salad, sweet and sour pork, pickled food), confectionary (e.g., jelly, pudding, bavarois, mousse) and frozen dessert (e.g., ice cream, sherbet, smoothie).

Of them, vinegar drinks are preferred because acetic acid can be taken easily and effectively. Vinegar drinks containing fruit juice are more preferred to improve preference. The fruit juice as used herein means the liquid part of fruit obtained by squeezing or extracting fruit. It may be in the form of pureed or grated fruit prepared by pureeing or grating fruit. Examples of fruit juice used for the fruit juice-containing vinegar drink according to the present invention include fruit juice derived from apples, peaches, grapes, acerolas, blueberries, raspberries, pears, lemon, *yuzu, sudachi,* lime, mandarin oranges, grapefruit, Citrus *hassaku,* calamansi, strawberries, pomegranate, bananas, melon, watermelon, *ume* (Japanese apricot), kiwi fruit, pineapple, cassis, apricot, guava, plum, mango, papayas and lychees. One fruit juice may be used or two or more of them may be used in combination. The above fruit juice may also be used after processing such as lyophilization, concentration and reduction.

The acetic acid-containing food or beverage product to which the present invention is applied includes foods that can be ingested for the purpose of health maintenance and promotion other than pharmaceutical products, such as health food, functional food, food with health claims, and food for special dietary uses, in addition to common food or beverage described above. Health food includes those available under the name of nutritional supplement, health supplement or supplement. Food with health claims, which is defined in the Food Sanitation Act and the Health Promotion Act, includes: foods for specified health uses and foods with nutrient function claims which can be labeled with specific health effects, function of nutrient components and reduction of disease risk; and foods with function claims which can be labeled with the function based on scientific evidence submitted to the Commissioner of the Consumer Affairs Agency. Food for special dietary uses includes food for people with diseases, food for elderly people, food for infants, food for pregnant and parturient women, which can be labeled with suitability for specific targets or patients with specific diseases. Labeling of specific health effects, function of nutrient components etc. on food may be on the container, the package, documents such as instructions and package inserts of the product, flyers and pamphlets of the product, and the advertisement of the product in newspaper or magazines.

The form of the food or beverage product may be any edible form such as solid, liquid, granules, particles, powder, capsules, cream and paste. In particular, for example, liquid (including syrup, emulsion and suspension), tablets, pills, capsules, powder, granules, fine particles and lozenges are preferred as the form of the health food and the like described above.

These acetic acid-containing food or beverage product may be produced by a usual method except for adding the agent for reducing acid irritation of the present invention. For example, a vinegar drink containing fruit juice may be produced by adding the agent for reducing acid irritation of the present invention, fruit juice, honey and the like to vinegar, and diluting the mixture as needed. Furthermore, *ponzu* soy sauce may be produced by adding the agent for reducing acid irritation of the present invention, soy sauce, sugar, salt, citrus fruit juice and spice to vinegar. In addition, *sushi* vinegar may be produced by adding the agent for reducing acid irritation of the present invention, seasoning such as sugar, salt and *mirin* (sweet cooking rice wine) to vinegar.

In the acetic acid-containing food or beverage product of the present invention, the content of cardamonin in the acetic acid-containing food or beverage product is in a predetermined range. More specifically, the content of cardamonin in the acetic acid-containing food or beverage product of the present invention may be in the range of 1 × 10⁻¹⁰ ppm or more and 100 ppm or less. In particular, the content of cardamonin in the acetic acid-containing food or beverage product of the present invention is 1.0 × 10⁻¹⁰ ppm or more, preferably 1.0 × 10⁻⁸ ppm or more, more preferably 1.0 × 10⁻⁶ ppm or more and further preferably 1.0 × 10⁻⁴ ppm or more, and 100 ppm or less, preferably 10 ppm or less and more preferably 1 ppm or less. While the content of the agent for reducing acid irritation of the present invention in the acetic acid-containing food or beverage product may be adjusted depending on the content of cardamonin in the agent for reducing acid irritation and the effect of reducing acid irritation, the content is 1 × 10⁻¹⁰ to 99.99% by mass, preferably 1 × 10⁻⁵ to 99.99% by mass, 0.01 to 99.99% by mass, more preferably 0.01 to 50.00% by mass, further more preferably 0.01 to 10.00% by mass, and particularly preferably 0.05 to 10.00% by mass.

In the acetic acid-containing food or beverage product of the present invention, the ratio of the content of acetic acid (w/v%) to the content of cardamonin (ppm) (content of acetic acid (w/v%)/ content of cardamonin (ppm)) is 0.01 to 1.0 × 10⁹, preferably 0.01 to 1.0 × 10⁷, and more preferably 0.01 to 1.0 × 10⁶.

The concentration of cardamonin in the acetic acid-containing food or beverage product of the present invention may be calculated from the amount added and the volume of the acetic acid-containing food or beverage product when the amount added is known (for example, when the acetic acid-containing food or beverage product is prepared by mixing purified cardamonin). When the amount added of cardamonin is unknown, the concentration of cardamonin may be calculated by or in accordance with the method described in Reference Example described below. In the present description, "ppm" means mass concentration (w/w).

The acetic acid-containing food or beverage product of the present invention may also comprise other raw materials depending on the type of the food or beverage. Examples of other raw materials include water, saccharides (including high intensity sweeteners), crushed materials prepared by cutting and/or mashing fruit and/or vegetables (squeezed juice (fruit juice and vegetable juice), puree, paste), flavors, salt, amino acid seasoning, nucleic acid seasoning, organic acid seasoning, acidulant, a flavor ingredient, a *umami* seasoning, liquor, oil and fat, spice, spice extract, flavor oil, viscosity adjustor, stabilizer, colorant, calcium salt and ingredients. The combination and the content of these raw materials are not particularly limited and may be set depending on the type of the food or beverage.

### Examples

In the following, the present invention will be described in more detail. However, the present invention is not limited thereto.

### (Reference Example)

In the following test examples, the content of acetic acid and the content of cardamonin in the evaluation sample were measured as follows.

### (1) Method for quantitative determination of content of acetic acid

The sample was diluted with ultrapure water so that the concentration of acetic acid was about 100 mg%. The peak area of acetic acid was analyzed using high performance liquid chromatography under the following conditions. 100 mg% acetic acid diluted with ultrapure water, which was a standard sample, was analyzed in a similar way, and the content of acetic acid in the respective samples was calculated by the external standard method.
· Measurement apparatus: high performance liquid chromatography (Model LC-10ADVP made by Shimadzu Corporation)
· Mobile phase (1) 4 mM p-toluenesulfonic acid aqueous solution, flow rate 0.9 mL/ minute
· Mobile phase (2) 16 mM Bis-tris aqueous solution including 4 mM p-toluenesulfonic acid and 80 µM EDTA, flow rate 0.9 mL/ minute
· Column: Shodex KC810P+KC-811 × 2 (made by SHOWA DENKO K.K.) · Column temperature: 50°C
· Detection: Conductivity Detector CDD-10_{VP} (made by Shimadzu Corporation)

### (2) Method for quantitative determination of content of cardamonin

The sample may be diluted with methanol. The peak area of cardamonin was analyzed using high performance liquid chromatography under the following conditions. 100 mg% cardamonin diluted with methanol, which was a standard sample, was analyzed by the same method, and the content of cardamonin in the respective samples was calculated by the external standard method.
· Measurement apparatus: high performance liquid chromatography (Model LC-10ADVP made by Shimadzu Corporation)
· Mobile phase: 75% methanol solution, 0.5 ml/ minute
· Column: Cadenza CD-C18 Prod #CD005 150 mm × 4.6 mm (3 µm) (made by Imtakt)
· Column temperature: 30°C
· Detection: Photodiode array detector SPD-M30A (made by Shimadzu Corporation, 360 nm)

### (Test Example 1) Investigation of content of cardamonin

### (1) Preparation of test product

Cardamonin powder (made by Shaanxi Yuantai Biological Technology, Specification: 98%) was dispersed in ethyl alcohol at 1% by mass. The dispersion was diluted with ethyl alcohol to give agent for reducing acid irritation S1 with the concentration of cardamonin described in Table 1. Test Products 1 to 7 were prepared by mixing 91% by mass of water and 0.5% by mass of the respective agents for reducing acid irritation S1 to 8.5% by mass of brown rice vinegar (acidity 6.1%). Furthermore, 91.5% by mass of water was mixed to 8.5% by mass of brown rice vinegar (acidity 6.1%) to give liquid as a control (agent for reducing acid irritation S1 not added).

### (2) Sensory evaluation test

6 professional panelists for analysis-type sensory evaluation assessed the respective test products prepared in (1) for the four items: "throat irritation when swallowed," "throat irritation after swallowing," "stuffy smell" and "acid taste."

### (Professional panelists for analysis-type sensory evaluation)

The professional panelists for analysis-type sensory evaluation are expert panelists of which ability to judge taste and aroma is guaranteed based on the following Discrimination Test (I) and Discrimination Test (II).

### Discrimination Test (I): Taste quality discrimination test

Taste quality discrimination test in which an aqueous solution is prepared for each of five tastes (sweet taste: taste of sugar, acid taste: taste of tartaric acid, *umami* taste: taste of sodium glutamate, salty taste: taste of sodium chloride, bitter taste: taste of caffeine) at a concentration close to the threshold of each component, and the sample of respective tastes are correctly discriminated from seven samples in total including the five aqueous solutions and two distilled water samples.

### Discrimination Test (II):

Concentration difference discrimination test in which concentration differences among five kinds of sodium chloride aqueous solutions and acetic acid aqueous solutions having slightly different concentrations are correctly discriminated.

### (Method of evaluation)

The sensory evaluation was performed in the order of: (i) presentation of samples; (ii) exchange of views on items of sensory evaluation; (iii) trial evaluation and calibration; and (iv) actual evaluation.

### (i) Presentation of samples

To eliminate panelists' bias and increase the accuracy of evaluation in the sensory evaluation, the samples were presented as follows. The samples were put and sealed in a 100 mL PET bottle and the temperature of the samples was set to room temperature (25°C). In every evaluation, about 1 teaspoon (about 5 mL) of the sample was transferred to a 20 mL plastic cup and presented to the panelists. At that stage, the panelists were provided with the sample of the respective test sections at random without being informed of the number of the test section or the content of the sample.

### (ii) Exchange of views on items of sensory evaluation

For evaluation, all panelists discussed and exchanged views on the characteristics of the respective items of evaluation to share common recognition. All panelists also previously discussed and set the overall evaluation to standardize the results of the sensory evaluation.

### (iii) Trial evaluation and calibration

Trial was performed for each evaluation item using samples with a different concentration of acetic acid to learn the criteria of evaluation. In the trial, the panelists delivered their own results of evaluation so that they can reproduce the results in the repeated evaluation.

### (iv) Actual evaluation

After securing the validity of the evaluation criteria for the panelists in the above trial, sensory evaluation was performed using the test product and control. More specifically, the test products were evaluated as follows. The sample was put and sealed in a 100 mL PET bottle and about 1 teaspoon (about 5 mL) of the sample was transferred to a 20 mL plastic cup from the bottle, and the panelists put the cup close to their nose and smelled it immediately to evaluate stuffy smell. Furthermore, the panelists sipped about 1 teaspoon (about 5 mL) of the sample and evaluated throat irritation when swallowed, throat irritation after swallowing, and acid taste. When the odor disappeared from the nasal cavity, the panelists evaluated the next sample. Furthermore, after sipping the sample, the panelists put water in their mouth to eliminate the flavor in the mouth and then evaluated the next sample.

### (Evaluation criteria)

For the calculation of the score of every item, the results from 6 panelists were weighted and averaged. Those with a score of 3.3 on a scale of 1 to 5 were rated as pass (effective), those with a score of 3.5 or more as having good effects, those with a score of 4 or more as more effective, and those with a score of 4.5 or more as the most effective. Those with a score of less than 3 even for one evaluation item out of the respective items were rated as failure.

### <Throat irritation when swallowed: sore or uncomfortable feeling, scratchy or tingling feeling in throat when taking sample>

5: Throat irritation weaker than that from control
4: Throat irritation slightly weaker than that from control
3: Throat irritation equal to that from control
2: Throat irritation slightly stronger than that from control
1: Throat irritation stronger than that from control

### <Throat irritation after swallowing: sore or uncomfortable feeling, scratchy or tingling feeling in throat after completely swallowing sample>

5: Throat irritation weaker than that from control
4: Throat irritation slightly weaker than that from control
3: Throat irritation equal to that from control
2: Throat irritation slightly stronger than that from control
1: Throat irritation stronger than that from control

### <Acid taste: sour taste felt on tongue>

5: Acid taste weaker than that of control
4: Acid taste slightly weaker than that of control
3: Acid taste equal to that of control
2: Acid taste slightly stronger than that of control
1: Acid taste stronger than that of control

### <Stuffy smell: smell like cheese, sweaty foot or socks taken off>

5: Stuffy smell weaker than that of control
4: Stuffy smell slightly weaker than that of control
3: Stuffy smell equal to that of control
2: Stuffy smell slightly stronger than that of control
1: Stuffy smell stronger than that of control

The results of the sensory evaluation of the test products (evaluation samples) are shown in Table 1.

**[Table 1]**

| | Test product | | | | | | |
|---|---|---|---|---|---|---|---|
| | 1 | 2 | 3 | 4 | 5 | 6 | 7 |
| Agent for reducing acid irritation S1 | | | | | | | |
| Concentration of cardamonin (ppm) | 2.0×10⁻⁶ | 2.0×10⁻⁵ | 2.0×10⁻⁴ | 10 | 100 | 2.0×10³ | 2.0×10⁴ |

| Evaluation sample | | | | | | | |
|---|---|---|---|---|---|---|---|
| Content of acetic acid (w/v%)(A) | 0.5 | 0.5 | 0.5 | 0.5 | 0.5 | 0.5 | 0.5 |
| Content of cardamonin (ppm)(B) | 1.0×10⁻⁸ | 1.0×10⁻⁷ | 1.0×10⁻⁶ | 0.001 | 0.5 | 10 | 100 |
| (A)/(B) | 5.0×10⁷ | 5.0×10⁶ | 5.0×10⁵ | 500 | 1.00 | 0.05 | 0.01 |
| Throat irritation when swallowed | 3.0 | 3.8 | 4.8 | 4.5 | 5.0 | 4.5 | 5.0 |
| Throat irritation after swallowing | 3.3 | 3.8 | 4.5 | 4.1 | 3.5 | 5.0 | 4.3 |
| Stuffy smell | 4.0 | 4.0 | 4.5 | 4.3 | 4.0 | 5.0 | 4.8 |
| Acid taste | 3.0 | 4.0 | 4.3 | 4.0 | 3.5 | 4.8 | 3.5 |
| Overall evaluation | 3.3 | 3.9 | 4.5 | 4.2 | 4.0 | 4.8 | 4.4 |

As shown in Table 1, addition of cardamonin (1.0 × 10⁻⁸ to 100 ppm) to the test product with a content of acetic acid of 0.5 w/v% is effective for reducing throat irritation, stuffy smell and acid taste.

### (Test Example 2) Influence due to content of acetic acid

### (1) Preparation of test product

Cardamonin powder (made by Shaanxi Yuantai Biological Technology, Specification: 98%) was dissolved in ethyl alcohol at 1% by mass to prepare agent for reducing acid irritation S2. Brown rice vinegar (acidity 6.1%) was mixed to water so that the content of acetic acid was as described in Table 2. The agent for reducing acid irritation S2 was added thereto so that the content of cardamonin was as described in Table 2 to prepare Test Products 8 to 11. Furthermore, samples were prepared without adding the agent for reducing acid irritation as a control (the same applies to the following Test Examples).

### (2) Sensory evaluation test

Sensory evaluation of the test products prepared in (1) was performed in the same manner as in Test Example 1. The results are shown in Table 2.

**[Table 2]**

| | Test product | | | |
|---|---|---|---|---|
| | 8 | 9 | 10 | 11 |
| Raw material (% by mass) | | | | |
| Brown rice vinegar (acidity 6.1%) | 4.3 | 8.5 | 17.0 | 34.1 |
| Agent for reducing acid irritation S2 | 0.05 | 0.10 | 0.20 | 0.40 |
| Water | Balance | Balance | Balance | Balance |
| Total | 100 | 100 | 100 | 100 |
| Content of acetic acid (w/v%) (A) | 0.25 | 0.5 | 1.0 | 2.00 |
| Content of cardamonin (ppm) (B) | 5 | 10 | 20 | 40 |
| (A)/(B) | 0.05 | 0.05 | 0.05 | 0.05 |

| <Results of sensory evaluation> | | | | |
|---|---|---|---|---|
| Throat irritation when swallowed | 4.3 | 4.5 | 4.6 | 4.1 |
| Throat irritation after swallowing | 4.8 | 4.1 | 3.8 | 3.4 |
| Stuffy smell | 4.3 | 4.3 | 3.9 | 3.5 |
| Acid taste | 3.6 | 4.0 | 3.8 | 3.5 |
| Overall evaluation | 4.3 | 4.2 | 4.0 | 3.6 |

As shown in Table 2, addition of cardamonin to the test product with a content of acetic acid changed in the range of 0.25 to 2.00 w/v% is effective for reducing throat irritation, stuffy smell and acid taste.

### (Test Example 3) Influence due to type of vinegar

### (1) Preparation of test product

Cardamonin powder (made by Shaanxi Yuantai Biological Technology, Specification: 98%) was dissolved in ethyl alcohol at 1% by mass to prepare agent for reducing acid irritation S2. Vinegars described in Table 3 (brown rice vinegar, apple vinegar, brewed vinegar) were mixed to water so that the content of acetic acid was 0.5% by mass. The agent for reducing acid irritation S2 was added thereto so that the content of cardamonin was as described in Table 3 to prepare Test Products 12 to 14.

### (2) Sensory evaluation test

Sensory evaluation of the test products prepared in (1) was performed in the same manner as in Test Example 1. The results are shown in Table 3.

**[Table 3]**

| | | Test product | | |
|---|---|---|---|---|
| | | 12 | 13 | 14 |
| Raw material (% by mass) | | | | |
| Vinegar | Brown rice vinegar (acidity 6.1%) | - | - | 8.5 |
| | Apple vinegar (acidity 6.7%) | - | 8.0 | - |
| | Brewed vinegar (acidity 15%) | 4.3 | - | - |
| Agent for reducing acid irritation S2 | | 0.50 | 0.50 | 0.50 |
| Water | | Balance | Balance | Balance |
| Total | | 100 | 100 | 100 |
| Content of acetic acid (w/v%)(A) | | 0.5 | 0.5 | 0.5 |
| Content of cardamonin (ppm)(B) | | 50 | 50 | 50 |
| (A)/(B) | | 0.01 | 0.01 | 0.01 |
| <Results of sensory evaluation> | | | | |
| Throat irritation when swallowed | | 4.8 | 5.0 | 4.1 |
| Throat irritation after swallowing | | 4.3 | 5.0 | 3.4 |
| Stuffy smell | | 3.0 | 3.8 | 3.5 |
| Acid taste | | 3.3 | 3.8 | 3.5 |
| Overall evaluation | | 3.9 | 4.4 | 3.6 |

As shown in Table 3, addition of cardamonin is effective for reducing throat irritation, stuffy smell and acid taste even when the vinegar is any of brown rice vinegar, apple vinegar or brewed vinegar.

(Test Example 4) Effect of addition of cardamonin on various acetic acid-containing food or beverages

### 1. Vinegar drinks containing fruit juice

### (1) Preparation of test product

Cardamonin powder (made by Shaanxi Yuantai Biological Technology) was dissolved in ethyl alcohol at 0.01% by mass to prepare agent for reducing acid irritation S3. Vinegar (brown rice vinegar, apple vinegar, brewed vinegar), fruit juice (apple juice, blueberry juice, pomegranate juice, lemon juice, peach juice, pink grapefruit juice) and organic acid (citric acid, malic acid and ascorbic acid) were mixed to water in the amount described in Table 4. Then, the above agent for reducing acid irritation S3 was added thereto to prepare Test Products 15 to 23. The amount of vinegar and the agent for reducing acid irritation S3 to be mixed were set so that the content of acetic acid and the content of cardamonin were as described in Table 4, respectively.

### (2) Sensory evaluation test

Sensory evaluation of the test products prepared in (1) (evaluation sample) was performed in the same manner as in Test Example 1. The results are shown in Table 4.

**[Table 4]**

| | Test product | | | | | | | | |
|---|---|---|---|---|---|---|---|---|---|
| | 15 | 16 | 17 | 18 | 19 | 20 | 21 | 22 | 23 |
| Evaluation sample | | | | | | | | | |
| Raw material (% by mass) | | | | | | | | | |
| Brown rice vinegar (acidity 6.1%) | 3.4 | - | - | 17 | 3.4 | 3.4 | 3.4 | - | - |
| Apple vinegar (acidity 6.7%) | - | 8 | 1 | - | - | - | - | 1 | 1 |
| Brewed vinegar (acidity 15%) | - | - | 1 | - | - | - | - | 1 | 1 |
| Sugar | 5 | - | - | 5 | 5 | 5 | - | 5 | 0.6 |
| High fructose corn syrup (Brix 55) | - | - | 2 | - | - | - | 2 | - | 2 |
| Sucralose | - | 0.01 | - | - | - | - | 0.02 | - | 0.005 |
| Apple juice (straight) | 20 | - | 2 | 20 | - | - | - | - | - |
| Apple juice (5 fold concentrated) | - | 0.4 | - | - | - | - | - | - | - |
| Blueberry juice (straight) | - | - | - | - | 20 | - | - | - | - |
| Pomegranate juice | - | - | - | - | - | 20 | - | - | - |
| Lemon juice (6 fold concentrated) | - | - | - | - | - | - | 0.25 | - | - |
| Peach juice (4 fold concentrated) | - | - | - | - | - | - | - | 5 | - |
| Pink grapefruit juice (6 fold concentrated) | - | - | - | - | - | - | - | - | 0.5 |
| Citric acid | - | 0.2 | - | - | - | - | 1 | 1 | 0.05 |
| Malic acid | - | 0.1 | - | - | - | - | - | - | - |
| Ascorbic acid | - | - | - | - | - | - | 0.06 | 0.06 | |
| Agent for reducing acid irritation S3 | 0.125 | 0.313 | 0.125 | 0.63 | 0.125 | 0.125 | 0.125 | 0.125 | 0.125 |
| Water | Balance | Balance | Balance | Balance | Balance | Balance | Balance | Balance | Balance |
| Total | 100 | 100 | 100 | 100 | 100 | 100 | 100 | 100 | 100 |
| Content of acetic acid (w/v%)(A) | 0.20 | 0.50 | 0.21 | 1.00 | 0.20 | 0.20 | 0.20 | 0.21 | 0.21 |
| Content of cardamonin (ppm)(B) | 12.5 | 31.3 | 12.5 | 63.0 | 12.5 | 12.5 | 12.5 | 12.5 | 12.5 |
| (A)/(B) | 0.016 | 0.016 | 0.017 | 0.016 | 0.016 | 0.016 | 0.016 | 0.017 | 0.017 |

| <Results of sensory evaluation> | | | | | | | | | |
|---|---|---|---|---|---|---|---|---|---|
| Throat irritation when swallowed | 3.50 | 4.25 | 4.25 | 4.00 | 4.00 | 4.00 | 4.00 | 3.75 | 4.50 |
| Throat irritation after swallowing | 3.75 | 4.50 | 4.25 | 4.00 | 4.50 | 4.00 | 3.75 | 3.75 | 4.00 |
| Stuffy smell | 3.75 | 3.75 | 3.00 | 4.00 | 4.50 | 3.50 | 4.00 | 3.00 | 3.00 |
| Acid taste | 3.50 | 3.75 | 3.00 | 3.50 | 4.25 | 3.25 | 3.25 | 3.50 | 3.50 |
| Overall evaluation | 3.63 | 4.06 | 3.63 | 3.88 | 4.31 | 3.69 | 3.75 | 3.50 | 3.75 |

### 2. Processed vinegar, dressing, pasta sauce, pickles

### (1) Preparation of test product

Cardamonin powder (made by Shaanxi Yuantai Biological Technology) was dissolved in ethyl alcohol at 0.01% by mass or 0.1% by mass to prepare agent for reducing acid irritation S3 and agent for reducing acid irritation S4.

Test Products 24 to 27 were prepared by mixing vinegar, seasoning and the like to water in the amount described in Table 5 and then adding the agent for reducing acid irritation S3 or the agent for reducing acid irritation S4. The amount of vinegar and the agent for reducing acid irritation to be mixed was set so that the content of acetic acid and the content of cardamonin were as described in Table 5, respectively.

For Test Product 28, 6 g of minced garlic and 115 g of minced onion were sautéed with 33.7 g of olive oil; 840 g of diced tomato, 4 g of salt and 1 g were added and stewed to prepare tomato sauce. 5.0% by mass of brewed vinegar and 0.53% by mass of water were added to 94% by mass of the tomato sauce and mixed. 0.47% by mass of the agent for reducing acid irritation S3 described above was added thereto to prepare test product 28.

Test product 29 was prepared by adding 0.15% by mass of the agent for reducing acid irritation S3 to 99.85% by mass of marketed pickles (Branston ORIGINAL (made by Mizkan)).

### (2) Sensory evaluation test

Sensory evaluation of the test products prepared in (1) was performed in the same manner as in Test Example 1. The results are shown in Table 5.

**[Table 5]**

| | Test product | | | | | |
|---|---|---|---|---|---|---|
| | 24 | 25 | 26 | 27 | 28 | 29 |
| Evaluation sample | | | | | | |
| Type of food or beverage | *Sushi* vinegar | Seasoning vinegar | *Ponzu* | Oil-free dressing | Pasta sauce | Commercially available pickles |
| Raw material (% by mass) | | | | | | |
| Rice vinegar (acidity 4.5%) | 48 | - | - | - | - | - |
| Brewed vinegar (acidity 15%) | - | 14.25 | 10.7 | 10.7 | 5.0 | - |
| Sugar | 43 | 40 | - | 8.5 | - | - |
| Salt | 8.5 | 9.5 | - | - | - | - |
| Soy sauce | - | - | 54 | 54 | - | - |
| Lemon juice | - | - | 0.3 | - | - | - |
| Ginger | - | - | - | 2.8 | - | - |
| Tomato sauce | - | - | - | - | 94 | |
| Pickles | - | - | - | - | | 99.85 |
| Agent for reducing acid irritation S3 | 0.1 | - | 0.5 | 0.5 | 0.47 | 0.15 |
| Agent for reducing acid irritation S4 | - | 0.18 | - | - | - | - |
| Water | Balance | Balance | Balance | Balance | 0.53 | - |
| Total | 100 | 100 | 100 | 100 | 100 | 100 |
| Content of acetic acid (w/v%) (A) | 2.17 | 2.10 | 1.58 | 1.58 | 0.75 | 1.9 |
| Content of cardamonin (ppm) (B) | 0.1 | 1.8 | 0.5 | 0.5 | 0.5 | 1.5 |
| (A)/(B) | 21.70 | 1.17 | 3.16 | 3.16 | 1.50 | 1.27 |

| <Results of sensory evaluation> | | | | | | |
|---|---|---|---|---|---|---|
| Throat irritation when swallowed | 4.8 | 5.0 | 4.5 | 4.0 | 3.8 | 3.8 |
| Throat irritation after swallowing | 5.0 | 5.0 | 4.3 | 4.3 | 4.3 | 4.0 |
| Stuffy smell | 3.3 | 3.0 | 3.0 | 3.0 | 3.0 | 3.3 |
| Acid taste | 4.5 | 3.8 | 3.8 | 4.0 | 3.3 | 2.8 |
| Overall evaluation | 4.4 | 4.2 | 3.9 | 3.8 | 3.6 | 3.5 |

As shown in Tables 4, 5, the effect of reducing throat irritation, stuffy smell and acid taste that cardamonin has was found in those acetic acid-containing food or beverage.

### (Test Example 5) Effect of addition of cardamonin extract

### (1) Preparation of test product

0.5 part by weight of cardamon powder (made by S&B) was added to 99.5 parts by weight of brewed vinegar (acidity 15%) and the mixture was allowed to stand at room temperature (25°C) for half a day, and filtered through filter paper (No. 2). 100 times or 10 times the amount of water was added to the filtrate to give agent for reducing acid irritation S5 and agent for reducing acid irritation S6.

The agent for reducing acid irritation S5 or S6 was added to brown rice vinegar (acidity 6.1%) and water in the amount to be added shown in Table 6 to give Test Products 30 to 33.

### (2) Sensory evaluation test

Sensory evaluation of the test products prepared in (1) was performed in the same manner as in Test Example 1. The results are shown in Table 6.

**[Table 6]**

| | Test product | | | |
|---|---|---|---|---|
| | 30 | 31 | 32 | 33 |
| Evaluation sample | | | | |
| Brown rice vinegar (acidity 6.1%) (% by mass) | 8.5 | 8.5 | 8.5 | 8.5 |
| Agent for reducing acid irritation S5 (% by mass) | 0.1 | 1 | - | - |
| Agent for reducing acid irritation S6 (% by mass) | - | - | 1 | 10 |
| Water (% by mass) | 91.4 | 90.5 | 90.5 | 81.5 |
| Content of acetic acid (w/v%) (A) | 0.5 | 0.5 | 0.5 | 0.5 |
| Content of cardamonin (ppm) (B) | 1.5×10⁻⁹ | 1.5×10⁻⁸ | 1.5×10⁻⁷ | 1.5×10⁻⁶ |
| (A)/(B) | 3.3×10⁸ | 3.3×10⁷ | 3.3×10⁶ | 3.3×10⁵ |

| <Results of sensory evaluation> | | | | |
|---|---|---|---|---|
| Throat irritation when swallowed | 4.0 | 4.3 | 4.3 | 4.0 |
| Throat irritation after swallowing | 4.0 | 4.0 | 4.5 | 3.5 |
| Stuffy smell | 3.9 | 3.8 | 4.3 | 3.5 |
| Acid taste | 3.8 | 4.0 | 3.8 | 3.3 |
| Overall evaluation | 3.9 | 4.0 | 4.2 | 3.6 |

As shown in Table 6, addition of the agent of reducing acid irritation is effective for reducing throat irritation, stuffy smell and acid taste.

### Industrial Applicability

The present invention is useful in the field of production of a food or beverage product containing acetic acid such as a vinegar drinks.

## Claims

1. Use of an agent for reducing acid irritation, wherein the agent comprises cardamonin as an active ingredient, wherein
the agent is for a food or beverage product comprising acetic acid, and
the agent is comprised in the food or beverage product so that a ratio of a content of acetic acid (w/v%) to a content of cardamonin (ppm) (content of acetic acid (w/v%)/ content of cardamonin (ppm)) in the food or beverage product is 0.01 to 1.0 x 10⁹.

2. The use according to claim 1, wherein the acid irritation is throat irritation due to acetic acid.

3. The use according to claim 1, wherein the agent is comprised in the food or beverage product 1 × 10⁻¹⁰ to 99.99% by mass.

4. A method for producing an acetic acid-containing food or beverage product with reduced acid irritation, comprising adding cardamonin to the acetic acid-containing food or beverage product, wherein
cardamonin is added to the acetic acid-containing food or beverage product so that a ratio of a content of acetic acid (w/v%) to a content of cardamonin (ppm) (content of acetic acid (w/v%)/ content of cardamonin (ppm)) in the acetic acid-containing food or beverage product is 0.01 to 1.0 x 10⁹.

5. The method according to claim 4, wherein the acid irritation is throat irritation due to acetic acid.

6. The method according to claim 4 or 5, wherein an amount of cardamonin added is 1 × 10⁻¹⁰ ppm or more and 100 ppm or less based on the acetic acid-containing food or beverage product.

## Patentansprüche

1. Verwendung eines Mittels zur Verringerung von Säurereizungen, wobei das Mittel Kardamonin als einen Wirkstoff umfasst, wobei
das Mittel für ein Nahrungsmittel- oder Getränkeprodukt ist, das Essigsäure umfasst, und
das Mittel so in dem Nahrungsmittel- oder Getränkeprodukt umfasst ist, dass ein Verhältnis eines Gehalts an Essigsäure (% w/v) zu einem Gehalt an Kardamonin (ppm) (Gehalt an Essigsäure (% w/v)/Gehalt an Kardamonin (ppm)) in dem Nahrungsmittel- oder Getränkeprodukt 0,01 bis 1,0 x 10⁹ beträgt.

2. Verwendung nach Anspruch 1, wobei die Säurereizung eine Rachenreizung aufgrund von Essigsäure ist.

3. Verwendung nach Anspruch 1, wobei das Mittel in dem Nahrungsmittel- oder Getränkeprodukt in 1 × 10⁻¹⁰ bis 99,99 Massen-% umfasst ist.

4. Verfahren zur Herstellung eines essigsäurehaltigen Nahrungsmittel- oder Getränkeprodukts mit verringerter Säurereizung, umfassend die Zugabe von Kardamonin zu dem essigsäurehaltigen Nahrungsmittel- oder Getränkeprodukt, wobei
Kardamonin dem essigsäurehaltigen Nahrungsmittel- oder Getränkeprodukt so zugesetzt wird, dass ein Verhältnis eines Gehalts an Essigsäure (% w/v) zu einem Gehalt an Kardamonin (ppm) (Gehalt an Essigsäure (% w/v)/Gehalt an Kardamonin (ppm)) im essigsäurehaltigen Nahrungsmittel- oder Getränkeprodukt 0,01 bis 1,0 x 10⁹ beträgt.

5. Verfahren nach Anspruch 4, wobei die Säurereizung eine Rachenreizung aufgrund von Essigsäure ist.

6. Verfahren nach Anspruch 4 oder 5, wobei eine Menge an zugesetztem Kardamonin 1 x 10⁻¹⁰ ppm oder mehr und 100 ppm oder weniger, bezogen auf das essigsäurehaltige Nahrungsmittel- oder Getränkeprodukt, beträgt.

## Revendications

1. Utilisation d'un agent permettant la réduction de l'irritation acide, dans laquelle l'agent comprend de la cardamonine en tant que principe actif, dans laquelle
l'agent est destiné à un produit alimentaire ou à une boisson comprenant de l'acide acétique, et
l'agent est compris dans le produit alimentaire ou la boisson afin qu'un rapport entre une teneur en acide acétique (% p/v) et une teneur en cardamonine (ppm) (teneur en acide acétique (% p/v)/teneur en cardamonine (ppm)) dans le produit alimentaire ou la boisson soit compris entre 0,01 et 1,0 × 10⁹.

2. Utilisation selon la revendication 1, dans laquelle l'irritation acide est une irritation de la gorge due à l'acide acétique.

3. Utilisation selon la revendication 1, dans laquelle l'agent est compris dans le produit alimentaire ou la boisson à raison de 1 × 10⁻¹⁰ à 99,99 % en masse.

4. Procédé permettant la production d'un produit alimentaire ou d'une boisson contenant de l'acide acétique présentant une irritation acide réduite, comprenant l'ajout de cardamonine au produit alimentaire ou à la boisson contenant de l'acide acétique, dans lequel
la cardamonine est ajoutée au produit alimentaire ou à la boisson contenant de l'acide acétique afin qu'un rapport entre une teneur en acide acétique (% p/v) et une teneur en cardamonine (ppm) (teneur en acide acétique (% p/v)/teneur en cardamonine (ppm)) dans le produit alimentaire ou la boisson contenant de l'acide acétique soit compris entre 0,01 et 1,0 × 10⁹.

5. Procédé selon la revendication 4, dans lequel l'irritation acide est une irritation de la gorge due à l'acide acétique.

6. Procédé selon l'une des revendications 4 ou 5, dans lequel une quantité de cardamonine ajoutée est de 1 × 10⁻¹⁰ ppm ou plus et de 100 ppm ou moins sur la base du produit alimentaire ou de la boisson contenant de l'acide acétique.
